# EUROPÄISCHE PATENTSCHRIFT

(11) **EP 1 914 089 B1**
(45) Veröffentlichungstag und Bekanntmachung des Hinweises auf die Patenterteilung: **07.04.2010**
(21) Anmeldenummer: 07118122.6
(22) Anmeldetag: 09.10.2007
(51) Int. Cl.: B60B 33/00

(54) **Lenkrolle mit hochfestem Achsträger**
Guide roll with high-strength cross-member
Galet de direction doté d'un support d'axe très résistant

(30) Priorität: 21.10.2006 DE 102006049725
(43) Veröffentlichungstag der Anmeldung: 23.04.2008
(73) Patentinhaber: GROSS + FROELICH GMBH&CO. KG, 71263 Weil der Stadt (DE)
(72) Erfinder: Berger, Ernst, 71131 Jettingen (DE); von Bordelius, Ralph, 71083 Herrenberg (DE)
(74) Vertreter: Wolf, Eckhard

(56) Entgegenhaltungen:
- WO-A-2006/117128
- DE-A1- 2 735 343
- DE-U1- 7 638 720
- DE-U1- 29 921 992
- US-A1- 2005 108 851

## Beschreibung

Die Erfindung betrifft eine Lenkrolle, insbesondere eine freilaufende Lenkrolle, mit Zwillingsrädem, mit einem Gehäuse mit einer im Wesentlichen vertikal ausgerichteten, oberseitigen Zapfenöffnung zur Aufnahme eines Drehzapfens zur Verbindung der Rolle mit einem Möbelstück oder einem anderen Gegenstand, und mit einem das Gehäuse quer zur Zapfenöffnung durchsetzenden, die Räder tragenden Achsbolzen, wobei in dem Gehäuse ein Achsträger mit einer Durchtrittsöffnung für den Achsbolzen angeordnet ist und wobei der Achsträger aus einem Material mit einer höheren Festigkeit als die des Gehäuses besteht.

Bei herkömmlichen Rollen ist der Achsbolzen direkt in das Rollengehäuse eingepresst. Da im Bereich des Achsbolzens große Kräfte von dem Gehäuse aufgenommen werden, beispielsweise Stöße beim Überfahren einer Schwelle oder beim harten Aufsetzen des Möbelstücks auf eine Rolle, kann die Achsaufnahme des Gehäuses schnell deformiert oder beschädigt werden. Aus diesem Grund wird ein hochwertiger, damit jedoch auch teurer Kunststoff für die Herstellung des Gehäuses verwendet.

Eine gattungsgemäße Rolle ist aus der WO2006/117128 A1 bekannt. Bei der dortigen Rolle ist der Achsträger jedoch verschiebbar in dem Gehäuse angeordnet, um eine gebremste und eine ungebremste Stellung der Räder zu ermöglichen. Weitere Rollen mit einem verschiebbaren Achsträger, der jedoch nicht aus einem Material mit höherer Festigkeit als die des Gehäuses besteht, sind aus der DE 27 35 343 A1, der US 2005/108851 A1, der DE 299 21 992 U1 sowie der DE 76 38 720 U1 bekannt.

Ausgehend hiervon besteht die Aufgabe der vorliegenden Erfindung darin, eine ungebremste Rolle der eingangs genannten Art zu entwickeln, die trotz hoher mechanischer Festigkeit im Bereich der Achsaufnahme eine kostengünstige Herstellung ermöglicht.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, dass die größten Belastungen der Rolle im Bereich der Achsaufnahme auftreten, dass davon entfernte Partien des Gehäuses jedoch weit weniger belastet werden und somit grundsätzlich aus einem zwar weniger festen, dafür aber kostengünstigeren Material bestehen können. Gemäß der Erfindung ist daher vorgesehen, dass der aus einem Material mit einer höheren Festigkeit als die des Gehäuses bestehende Achsträger in das Gehäuse eingepresst, eingeklebt oder mit diesem verschweißt ist. Der Achsträger erfordert als separates Bauteil wesentlich weniger Materialeinsatz als das übrige Gehäuse, so dass für den Achsträger ein höherwertiges Material verwendet werden kann als für das Gehäuse. Die erforderliche Festigkeit des Bereichs der Achsaufnahme wird so bei geringeren Kosten erreicht, als wenn das gesamte Gehäuse aus dem festeren Material hergestellt würde. Grundsätzlich kann der Achsträger vollständig von dem übrigen Gehäusematerial umschlossen sein, beispiels weise durch entsprechendes Anordnen des Achsträgers in einer Spritzgussform für das Gehäuse. In bevorzugter Ausgestaltung der Erfindung weist das Gehäuse jedoch eine nach außen offene, schachtförmige Achsträgeröffnung zur Aufnahme des Achsträgers auf. Das Gehäuse und der Achsträger können dann unabhängig voneinander hergestellt und zu einem beliebigen Zeitpunkt zusammengefügt werden.

In weiter bevorzugter Ausgestaltung der Erfindung bestehen sowohl das Gehäuse als auch der Achsträger aus einem Kunststoffmaterial, das Gehäuse beispielsweise aus einem Polypropylen und der Achsträger aus einem Polyamid. Alternativ kann der Achsträger auch aus einem Metall, vorzugsweise aus einer Zink- oder Leichtrnetalllegierung bestehen.

Grundsätzlich kann der Achsträger eine beliebige Querschnittsform aufweisen, beispielsweise eine rechteckige oder eine runde, bevorzugt weist er jedoch einen im Wesentlichen rechteckigen Querschnitt mit zwei quer zur Durchtrittsöffnung des Achsbolzens angeordneten, einstückig angeformten Rippen auf. Ein Aufhebeln des Gehäuses bei extremer Belastung kann vermieden werden, wenn der Achsträger in alternativer Ausgestaltung einen im Wesentlichen hantelförmigen Querschnitt aufweist, wobei die jeweils T-förmigen Endpartien in entsprechende Hinterschneidungen der Achsträgeröffnung.

In weiter bevorzugter Ausgestaltung der Erfindung ist der Achsbolzen in die Durchtrittsöffnung des Achsträgers eingepresst, wobei er zum Erzielen eines Form- und Kraftschlusses eine Rändelung oder gleichartige Profilierung an seiner im Achsträger aufgenommenen Partie aufweisen kann. Ein besonders sicherer Sitz der Räder auf dem Achsbolzen ist dann gegeben, wenn der Achsbolzen auf beiden Seiten des Gehäuses mit zwei im Abstand voneinander angeordneten Hinterschneidungen versehen ist, mit denen Wülste auf der Innenseite der rohrförmigen Naben der Räder im Eingriff stehen. Die Naben der Räder können sich axial bis in den Bereich der die Achsträgeröffnung begrenzenden Wandpartien erstrecken.

Zweckmäßig sind Ausnehmungen in den die Achsträgeröffnung begrenzenden Wandpartien des Gehäuses für den Durchtritt des Achsbolzens vorgesehen, wobei die Ausnehmungen größer sein sollten als der Querschnitt des Achsbolzens, so dass der Achsbolzen bei geringen Auslenkungen nicht in Kontakt mit der benachbarten Gehäusewandung tritt. Bevorzugt ist die Achsträgeröffnung lateral zu der Zapfenöffnung versetzt in der Unterseite des Gehäuses angeordnet.

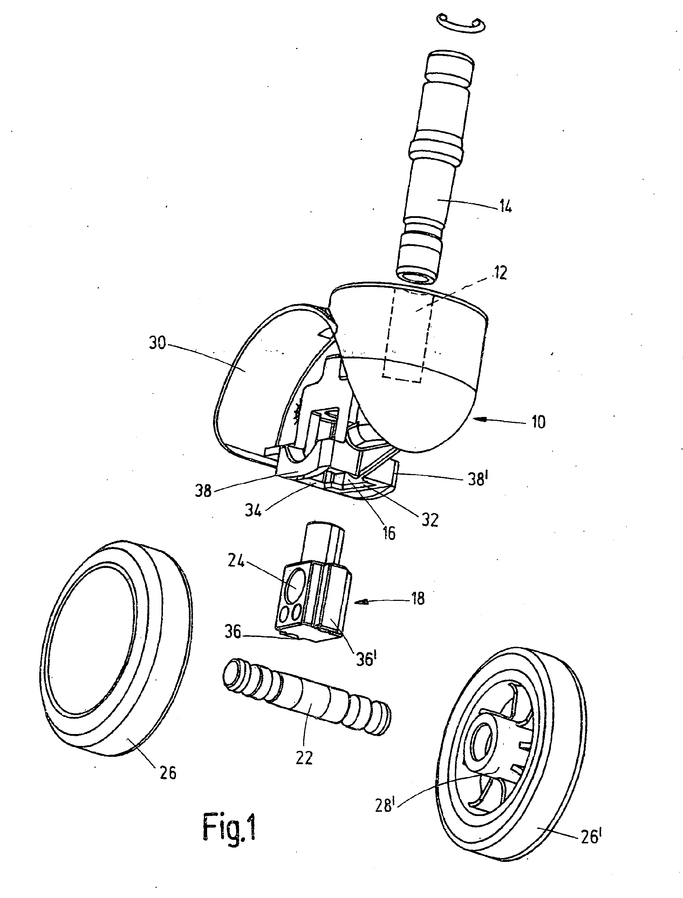

Im Folgenden wird die Erfindung anhand der in der Zeichnung in schematischer Weise dargestellten Ausführungsbeispiele näher erläutert. Es zeigt
- Fig. 1: eine perspektivische Explosionsansicht einer freilaufenden Lenkrolle mit Zwillingsrädern und einem Achsträger zur Aufnahme des Achsbolzens.

Die in der Zeichnung dargestellte Rolle besteht im Wesentlichen aus einem Gehäuse 10 mit einer Zapfenöffnung 12 zur Aufnahme eines Drehzapfens 14, mittels dessen die Rolle an einem Möbelstück oder dergleichen drehbar befestigt wird, und mit einer Achsträgeröffnung 16 zur Aufnahme eines Achsträgers 18, aus einem Achsbolzen 22, der in eine Durchtrittsöffnung 24 des Achsträgers 18 eingepresst und quer zu der Achsträgeröffnung 16 ausgerichtet ist, und aus zwei Rädern 26, 26' mit rohrförmigen Naben 28, 28', die auf die freien Enden des Achsbolzens 22 aufgesteckt sind und sich auf diesem drehen. Die Räder bestehen aus einem Radkörper mit aufgespritzten Laufflächen aus einem dem Einsatzzweck angepassten Material, beispielsweise einem weichen Material für den Einsatz auf harten Böden oder einem harten Material zum Einsatz auf Teppichböden o. dgl. Ein bogenförmiges Dach 30 des Gehäuses 10 überdeckt den oberen Bereich der Räder 26, 26'.

Das Gehäuse 10 weist im Bereich der Achsträgeröffnung 16 Ausnehmungen 32 auf, die von dem Achsträger 18 durchsetzt werden und diesen führen. Quer dazu weist das Gehäuse Nuten 34 auf, in die an den Achsträger 18 angeformte Rippen 36, 36' eingreifen. Auch diese Maßnahme dient der besseren Führung des Achsträgers 18 und erhöht die Belastbarkeit der Anordnung. An dem unteren Ende der Achsträgeröffnung 16 stehen zwei Vorsprünge 38, 38' lateral von der Gehäusewandung ab. Diese Vorsprünge 38, 38' bilden eine laterale Abdeckung für die Naben und den darüber liegenden Gehäusebereich, so dass ein Eintreten von Verschmutzungen dorthin verhindert wird. Gleichzeitig verstärken sie das Gehäuse 10 im Bereich der Achsträgeröffnung 16 derart, dass die den Achsträger 18 aufnehmende Gehäusepartie vergleichsweise schmal ausgebildet werden kann. Hierdurch können die Naben 28, 28' der Räder besonders lang ausgebildet und bis in den Bereich der Ausnehmungen 32 geführt werden, wodurch sie eine vergleichsweise große Aufnahmetiefe für den Achsbolzen 22 aufweisen können, was die Stabilität und Tragfähigkeit der Rolle erhöht. Insgesamt kann durch diese Maßnahmen der Materialeinsatz für die Herstellung des Gehäuses 10 bei Einhaltung geforderter Belastbarkeitswerte erheblich vermindert werden.

Bei der Montage der Rolle wird zunächst der Achsträger 18 in die Achsträgeröffnung 16 eingepresst oder eingesetzt und fixiert, so dass die Durchtrittsöffnung 24 für den Achsbolzen 22 freigegeben ist und zwischen dem Achsbolzen 22 und den Vorsprüngen 38, 38' hinreichend Freiraum für die Naben der Räder vorhanden ist. Dann wird der Achsbolzen 22 zentriert in die Durchtrittsöffnung 24 eingepresst. Schließlich werden die Räder 26, 26' mit ihren rohrförmigen Naben 28, 28' auf den Achsbolzen 22 aufgeschoben, wobei sie mit Wülsten in Hinterschneidungen oder Nuten im Achsbolzen 22 einrasten. Das Einsetzen des Drehzapfens 14 in die Zapfenöffnung 12 kann vor oder nach der Montage des Achsträgers, des Achsbolzens und der Räder erfolgen.

Zusammenfassend ist folgendes festzuhalten: Die Erfindung betrifft eine Lenkrolle, insbesondere freilaufende Lenkrolle, mit Zwillingsrädern 26, 26', mit einem Gehäuse 10 mit einer im Wesentlichen vertikal ausgerichteten, oberseitigen Zapfenöffnung 12 zur Aufnahme eines Drehzapfens 14 zur Verbindung der Rolle mit einem Möbelstück oder einem anderen Gegenstand, und mit einem das Gehäuse quer zur Zapfenöffnung durchsetzenden, die Räder tragenden Achsbolzen 22. Um eine kostengünstige Herstellung bei hinreichender Belastbarkeit im Bereich der Achsaufnahme zu ermöglichen, wird gemäß der Erfindung vorgeschlagen, dass in dem Gehäuse ein Achsträger 18 mit einer Durchtrittsöffnung 24 für den Achsbolzen 22 angeordnet ist, wobei der Achsträger 18 aus einem Material mit einer höheren Festigkeit als die des Gehäuses 10 besteht.

## Patentansprüche

1. Lenkrolle, insbesondere freilaufende Lenkrolle, mit Zwillingsrädern (26, 26'), mit einem Gehäuse (10) mit einer im Wesentlichen vertikal ausgerichteten, oberseitigen Zapfenöffnung (12) zur Aufnahme eines Drehzapfens (14) zur Verbindung der Rolle mit einem Möbelstück oder einem anderen Gegenstand, und mit einem das Gehäuse quer zur Zapfenöffnung durchsetzenden, die Räder tragenden Achsbolzen (22), wobei in dem Gehäuse (10) ein Achsträger (18) mit einer Durchtrittsöffnung (24) für den Achsbolzen (22) angeordnet ist und wobei der Achsträger (18) aus einem Material mit einer höheren Festigkeit als die des Gehäuses (10) besteht, **dadurch gekennzeichnet, dass** der Achsträger (18) in das Gehäuse (10) eingepresst, eingeklebt oder mit diesem verschweißt ist.

2. Lenkrolle nach Anspruch 1, **gekennzeichnet durch** eine im Gehäuse (10) vorgesehene schachtförmige Achsträgeröffnung (16) zur Aufnahme des Achsträgers (18).

3. Lenkrolle nach Anspruch 1 oder 2, **dadurch gekennzeichnet, dass** das Gehäuse (10) und der Achsträger (18) aus Kunststoffmaterial bestehen.

4. Lenkrolle nach einem der Ansprüche 1 bis 3, **dadurch gekennzeichnet, dass** das Gehäuse (10) aus einem Polypropylen und der Achsträger (18) aus einem Polyamid besteht.

5. Lenkrolle nach Anspruch 1 oder 2, **dadurch gekennzeichnet, dass** das Gehäuse (10) aus einem Kunststoff, vorzugsweise aus Polypropylen, und der Achsträger (18) aus einem Metall, vorzugsweise aus einer Zink- oder Leichtmetalllegierung, besteht.

6. Lenkrolle nach einem der Ansprüche 1 bis 5, **dadurch gekennzeichnet, dass** der Achsträger (18) kraft-, stoff- und/oder formschlüssig in dem Gehäuse (10) angeordnet ist.

7. Lenkrolle nach einem der Ansprüche 1 bis 6, **dadurch gekennzeichnet, dass** der Achsträger (18) einen im Wesentlichen rechteckigen Querschnitt mit zwei quer zur Durchtrittsöffnung (24) des Achsbolzens (22) angeordneten, einstückig angeformten Führungsrippen (36, 36') aufweist.

8. Lenkrolle nach einem der Ansprüche 1 bis 7, **dadurch gekennzeichnet, dass** der Achsträger (18) einen im Wesentlichen hantelförmigen Querschnitt aufweist, wobei die jeweils T-förmigen Endpartien in entsprechende Hinterschneidungen der Achsträgeröffnung (16) eingreifen und ein Aufhebeln des Gehäuses (10) unter Belastung verhindern.

9. Lenkrolle nach einem der Ansprüche 1 bis 8, **dadurch gekennzeichnet, dass** der Achsbolzen (22) in die Durchtrittsöffnung (24) des Achsträgers (18) eingepresst ist.

10. Lenkrolle nach einem der Ansprüche 1 bis 9, **dadurch gekennzeichnet, dass** der Achsbolzen (22) auf beiden Seiten des Gehäuses (10) mit zwei im Abstand voneinander angeordneten Hinterschneidungen versehen ist, mit denen Wülste auf der Innenseite rohrförmiger Naben (28, 28') der Räder (26, 26') im Eingriff stehen.

11. Lenkrolle nach einem der Ansprüche 1 bis 10, **gekennzeichnet durch** Ausnehmungen (32) in den die Achsträgeröffnung begrenzenden Wandpartien des Gehäuses (10) für den Durchtritt des Achsbolzens (22).

12. Lenkrolle nach einem der Ansprüche 1 bis 11, **dadurch gekennzeichnet, dass** die Achsträgeröffnung (16) lateral zu der Zapfenöffnung (12) versetzt in der Unterseite des Gehäuses (10) angeordnet ist.

## Claims

1. A caster, in particular free-running caster, having twinned wheels (26, 26'), having a housing (10) with a substantially vertically aligned, upper-side journal opening (12) for holding a rotary journal (14) for connecting the caster to an item of furniture or to some other object, and having an axle bolt (22) which extends through the housing transversely with respect to the journal opening and supports the wheels, wherein an axle carrier (18) having a passage opening (24) for the axle bolt (22) is arranged in the housing (10), with the axle carrier (18) being composed of a material with a higher strength than the housing (10), **wherein** the axle carrier (18) is pressed in, adhesively bonded or welded to the housing (10).

2. The caster as claimed in claim 1, **characterized by** a duct-shaped axle carrier opening (16), which is provided in the housing (10), for holding the axle carrier (18).

3. The caster as claimed in claim 1 or 2, **wherein** the housing (10) and the axle carrier (18) are composed of a plastic material.

4. The caster as claimed in one of claims 1 to 3, **wherein** the housing (10) is composed of a polypropylene and the axle carrier (18) is composed of a polyamide.

5. The caster as claimed in claim 1 or 2, **wherein** the housing (10) is composed of a plastic, preferably of polypropylene, and the axle carrier (18) is composed of a metal, preferably of a zinc alloy or light metal alloy.

6. The caster as claimed in one of claims 1 to 5, **wherein** the axle carrier (18) is arranged in a force-fitting, cohesively joined and/or form-fitting manner in the housing (10).

7. The caster as claimed in one of claims 1 to 6, **wherein** the axle carrier (18) has a substantially rectangular cross section with two integrally formed guide ribs (36, 36') which are arranged transversely with respect to the passage opening (24) of the axle bolt (22).

8. The caster as claimed in one of claims 1 to 7, **wherein** the axle carrier (18) has a substantially dumbbell-shaped cross section, with the in each case T-shaped end parts engaging into corresponding undercuts of the axle carrier opening (16) and preventing the housing (10) from being levered open under loading.

9. The caster as claimed in one of claims 1 to 8, **wherein** the axle bolt (22) is pressed into the passage opening (24) of the axle carrier (18).

10. The caster as claimed in one of claims 1 to 9, **wherein** the axle bolt (22) is provided, on both sides of the housing (10), with two undercuts which are arranged spaced apart from one another and with which beads on the inner side of tubular hubs (28, 28') of the wheels (26, 26') are in engagement.

11. The caster as claimed in one of claims 1 to 10, **characterized by** recesses (32), for the leadthrough of the axle bolt (22), in those wall parts of the housing (10) which delimit the axle carrier opening.

12. The caster as claimed in one of claims 1 to 11, **wherein** the axle carrier opening (16) is arranged laterally offset with respect to the journal opening (12) in the underside of the housing (10).

## Revendications

1. Galet directionnel, notamment galet directionnel à course libre comprenant des roulettes jumelées (26, 26') ; un boîtier (10) muni d'un orifice (12) situé à la face supérieure, orienté pour l'essentiel verticalement et conçu pour recevoir un tourillon (14) destiné à relier ledit galet à un élément de mobilier, ou à un objet autre ; et une cheville d'axe (22) portant les roulettes et traversant le boîtier, transversalement par rapport à l'orifice logeant le tourillon, ledit boîtier (10) renfermant un support d'axe (18) percé d'un orifice (24) de passage de ladite cheville d'axe (22), et ledit support d'axe (18) consistant en un matériau de robustesse plus grande que celle dudit boîtier (10), **caractérisé par le fait que** ledit support d'axe (18) est emmanché à force dans ledit boîtier (10), intégré dans ce dernier par collage, ou soudé à ce dernier.

2. Galet directionnel selon la revendication 1, **caractérisé par** un orifice (16) en forme de cage, prévu dans le boîtier (10) pour recevoir le support d'axe (18).

3. Galet directionnel selon la revendication 1 ou 2, **caractérisé par le fait que** le boîtier (10) et le support d'axe (18) sont constitués d'une matière plastique.

4. Galet directionnel selon l'une des revendications 1 à 3, **caractérisé par le fait que** le boîtier (10) consiste en un polypropylène, et le support d'axe (18) en un polyamide.

5. Galet directionnel selon la revendication 1 ou 2, **caractérisé par le fait que** le boîtier (10) consiste en une matière plastique, de préférence en du polypropylène, et le support d'axe (18) consiste en un métal, de préférence en un alliage à base de zinc ou d'un métal léger.

6. Galet directionnel selon l'une des revendications 1 à 5, **caractérisé par le fait que** le support d'axe (18) est intégré dans le boîtier (10) par une solidarisation mécanique, matérielle et/ou instaurée par concordance de formes.

7. Galet directionnel selon l'une des revendications 1 à 6, **caractérisé par le fait que** le support d'axe (18) offre une section transversale sensiblement rectangulaire, présentant deux nervures de guidage (36, 36') venues solidairement de moulage et agencées transversalement par rapport à l'orifice (24) de passage de la cheville d'axe (22).

8. Galet directionnel selon l'une des revendications 1 à 7, **caractérisé par le fait que** le support d'axe (18) offre une section transversale présentant, pour l'essentiel, une configuration en haltère, sachant que les parties extrêmes, respectivement configurées en T, pénètrent dans des contre-dépouilles correspondantes de l'orifice (16) recevant ledit support d'axe, et empêchent le boîtier (10) d'être soulevé sous contrainte, par effet de levier.

9. Galet directionnel selon l'une des revendications 1 à 8, **caractérisé par le fait que** la cheville d'axe (22) est emmanchée à force dans l'orifice de passage (24) pratiqué dans le support d'axe (18).

10. Galet directionnel selon l'une des revendications 1 à 9, **caractérisé par le fait que** la cheville d'axe (22) est dotée, de part et d'autre du boîtier (10), de deux contre-dépouilles placées à distance l'une de l'autre, avec lesquelles viennent en prise des renflements situés sur la face intérieure de moyeux tubulaires (28, 28') des roulettes (26, 26').

11. Galet directionnel selon l'une des revendications 1 à 10, **caractérisé par** des évidements (32) ménagés dans les zones de paroi du boîtier (10) qui délimitent l'orifice recevant le support d'axe, en vue du passage de la cheville d'axe (22).

12. Galet directionnel selon l'une des revendications 1 à 11, **caractérisé par le fait que** l'orifice (16) recevant le support d'axe est pratiqué dans la face inférieure du boîtier (10), avec décalage latéral vis-à-vis de l'orifice (12) logeant le tourillon.
